# EUROPÄISCHE PATENTSCHRIFT

(11) **EP 0 540 546 B1**
(45) Veröffentlichungstag und Bekanntmachung des Hinweises auf die Patenterteilung: **28.09.1994**
(21) Anmeldenummer: 91912493.3
(22) Anmeldetag: 11.07.1991
(51) Int. Cl.: B01D 29/05, B29C 47/68

(54) **FILTRIERVORRICHTUNG FÜR THERMOPLASTISCHES KUNSTSTOFFMATERIAL**
FILTER FOR THERMOPLASTIC MATERIAL
DISPOSITIF DE FILTRATION POUR MATIERE THERMOPLASTIQUE

(30) Priorität: 23.07.1990 AT 1541/90
(43) Veröffentlichungstag der Anmeldung: 12.05.1993
(73) Patentinhaber: EREMA Engineering Recycling Maschinen und Anlagen Gesellschaft m.b.H., A-4052 Ansfelden-Linz (AT)
(72) Erfinder: BACHER, Helmut, A-4600 Schleissheim (AT); SCHULZ, Helmuth, A-4490 St. Florian (AT); WENDELIN, Georg, A-4511 Allhaming (AT); WENDELIN, Gerhard, A-4040 Linz-Urfahr (AT)
(74) Vertreter: Wildhack, Helmut, Dipl.-Ing. Dr.
(86) Internationale Anmeldenummer: AT9100084
(87) Internationale Veröffentlichungsnummer: WO9201500

(56) Entgegenhaltungen:
- EP-A- 0 250 695
- EP-A- 0 270 501
- DE-C- 3 606 138

## Beschreibung

Die Erfindung bezieht sich auf eine Filtriervorrichtung gemäß dem Oberbegriff von Anspruch 1.

Eine derartige Filtriervorrichtung ist bekannt (EP-B 250 695). Sie hat den Vorteil, daß für die Reinigung der Siebanordnungen die Versorgung der der Filtriervorrichtung nachgeschalteten Maschine, zumeist eines Extruders mit angeschlossener Form, mit Schmelze nicht unterbrochen wird, sondern - wenngleich auch mit reduziertem Durchsatz - kontinuierlich weiterläuft, so daß auch ein wesentlicher Druckanstieg im Flußkanal vor der Filtriervorrichtung vermieden wird. Nachteilig ist jedoch, daß ein verhältnismäßig langer Rückspülkanal vorliegt, der zudem nicht ständig durchströmt ist, so daß eine thermische Schädigung des darin befindlichen Kunststoffmateriales (Verkrackung) nicht ausgeschlossen werden kann.

Bei einer weiteren bekannten Filtriervorrichtung etwas abweichender Bauweise (EP-A 314 024) liegen in einem in seiner Längsrichtung verschiebbaren Trägerkörper vier Siebnester vor, die paarweise in Längsrichtung des Trägerkörpers hintereinander liegen. Auch bei dieser Konstruktion ist nachteilig, daß Teile des für die Rückspülung verwendeten, im Gehäuse verlaufenden Kanales in jeder Produktionsstellung mit Kunststoffschmelze gefüllt, aber nicht durchflossen sind, so daß die Gefahr einer Verkrackung besteht.

Die vorliegende Erfindung hat sich zur Aufgabe gestellt, die bekannte Vorrichtung noch weiter zu verbessern, insbesondere hinsichtlich der Einfachheit der Bauweise und hinsichtlich der Erhöhung der Menge des dem zu reinigenden Sieb zugeführten Schmelzevolumens, was gleichbedeutend ist mit einer Verbesserung der Intensität der Rückspülung und damit der Siebreinigung, vor allem aber hinsichtlich der Kürze des Rückspülkanales und der Vermeidung einer in ihm stehenden Kunststoffschmelze. Die Erfindung löst diese Aufgabe durch die Merkmale des Kennzeichens von Anspruch 1. Auf diese Weise strömt die zur Rückspülung verwendete Schmelze, welche von der zum Abgabekanal strömenden Schmelze im Sammelraum des einen Siebnestes abgezweigt wird, lediglich im Trägerkörper zum Sammelraum des anderen, zu reinigenden Siebnestes, da der Rückspülkanal, der von einem Durchbruch der Trennwand gebildet sein kann, den Trägerkörper nicht verläßt, also nicht auch durch das Gehäuse bzw. über den Abströmkanal geführt ist, wie dies bei den eingangs beschriebenen Konstruktionen der Fall ist. Die Vermeidung von Umlenkungen des zur Rückspülung verwendeten Schmelzestromes bewirkt auch bessere Druckverhältnisse an der Zustromseite des der Rückspülung unterworfenen Siebnestes, so daß sich eine bessere Reinigung ergibt, zumal sich der gesamte Rückspülstrom auf nur eine Siebfläche konzentriert, was im Vergleich zu den bekannten Konstruktionen eine erhöhte Fließgeschwindigkeit durch das rückzuspülende Sieb und damit einen besseren Reinigungseffekt zur Folge hat.

Ein weiterer Vorteil gegenüber der eingangs geschilderten bekannten Konstruktion liegt darin, daß die erfindungsgemäße Filtriervorrichtung auch nur mit einem einzigen Trägerkörper funktionsfähig ist, wogegen bei der zuerst beschriebenen bekannten Ausführungsform zumindest zwei Trägerkörper erforderlich sind. Selbstverständlich ist jedoch die erfindungsgemäße Ausbildung auch auf Vorrichtungen mit zwei oder mehr Trägerkörpern anwendbar. Bei einer Vorrichtung mit zwei Trägerkörpern mit je zwei Siebnestern verbleibt bei der erfindungsgemäßen Ausbildung 3/4 der Siebfläche im aktiven Durchfluß, bei der eingangs erwähnten bekannten Ausführungsform hingegen nur die Hälfte der Siebfläche. Dies bedeutet im Vergleich zur letzteren Ausbildung geringere Druckunterschiede zwischen normaler Filterposition und Rückspülposition. In gleicher Weise ist die erfindungsgemäße Ausbildung anwendbar auf Vorrichtungen, bei welchen ein einziger Trägerkörper, insbesondere ein in seiner Längsrichtung verschiebbarer Kolben, zwei oder mehr Siebnestpaare, also vier oder mehr Siebnester trägt.

Da bei der erfindungsgemäßen Konstruktion die Länge des Rückspülkanales sehr gering gehalten werden kann und der Rückspülkanal ständig von Schmelze durchströmt ist, kann eine Verkrackung des Kunststoffmateriales im Rückspülkanal nicht auftreten.

Eine bei Rückspülfiltern stets erhobene Forderung ist ein maximaler Rückspülstrom durch das zu reinigende Filter zur Erzielung einer guten Reinigung bei nur geringfügig reduziertem Gesamtdurchsatz durch die Filtriervorrichtung. Wie sich aus Vorstehendem ergibt, macht die Erfindung bereits einen Schritt in dieser Richtung. Die Verhältnisse können aber gemäß einer bevorzugten Ausführungsform der Erfindung noch weiter verbessert werden. Diese Verbesserung geht aus von der Erkenntnis, daß die Rückspülung von Teilfilterflächen die erwähnten Bedingungen noch besser erfüllt. Ausgehend von dieser Erkenntnis besteht eine Weiterbildung der Erfindung darin, daß unterschiedliche Rückspülstellungen des Trägerkörpers für die Rückspülung unterschiedlicher Teilbereiche des Siebes des jeweiligen Siebnestes vorgesehen sind, welche Teilbereiche durch zumindest eine den Verteilerraum des jeweiligen Siebnestes unterteilende, zum zugehörigen Sieb führende, insbesondere normal auf dieses stehende Wand begrenzt sind. Die Anzahl dieser Teilbereiche bzw. der dazugehörigen Wände kann beliebig gewählt werden, aus Gründen der Übersichtlichkeit und der einfachen Bauweise empfehlen sich jedoch nur zwei Teilbereiche pro Sieb. Hiebei ist gemäß einer Weiterbildung der Erfindung für jedes Siebnest eine der Anzahl seiner Siebteilbereiche entsprechende Anzahl von Zuströmkanälen vorgesehen, von denen jeweils einer in das dem jeweiligen Siebteilbereich zugeordnete Abteil des Verteilerraumes mündet, wobei in der Filtrierstellung alle diese Zuströmkanäle mit dem gemeinsamen Zuführkanal in Verbindung stehen, wogegen in jeder Rückspülstellung jeweils einer dieser Zuströmkanäle pro zu reinigendem Siebnest zur Ableitung der Verunreinigungen dient, wogegen die restlichen dieser Zuströmkanäle abgeschlossen sind.

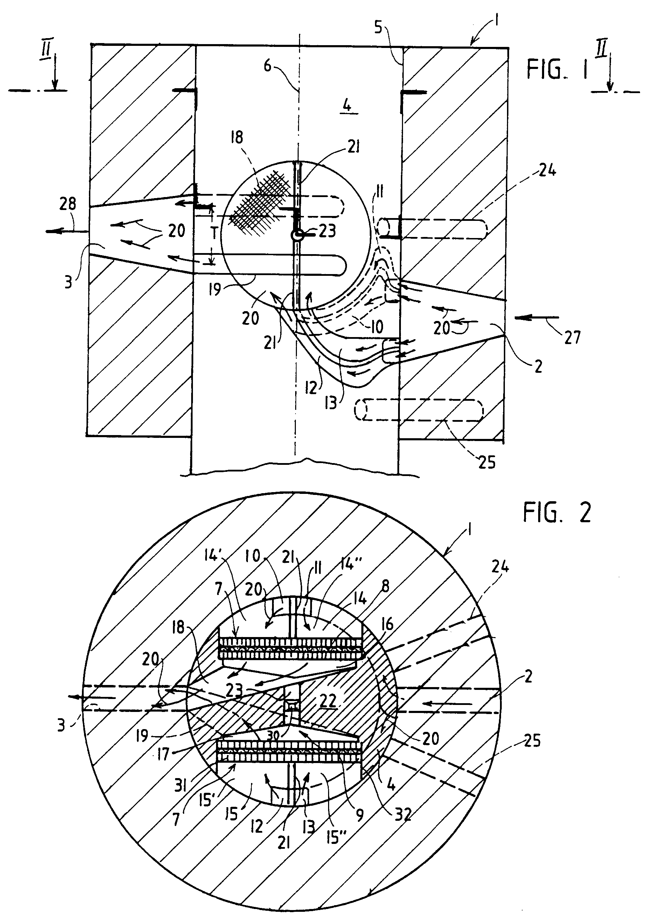

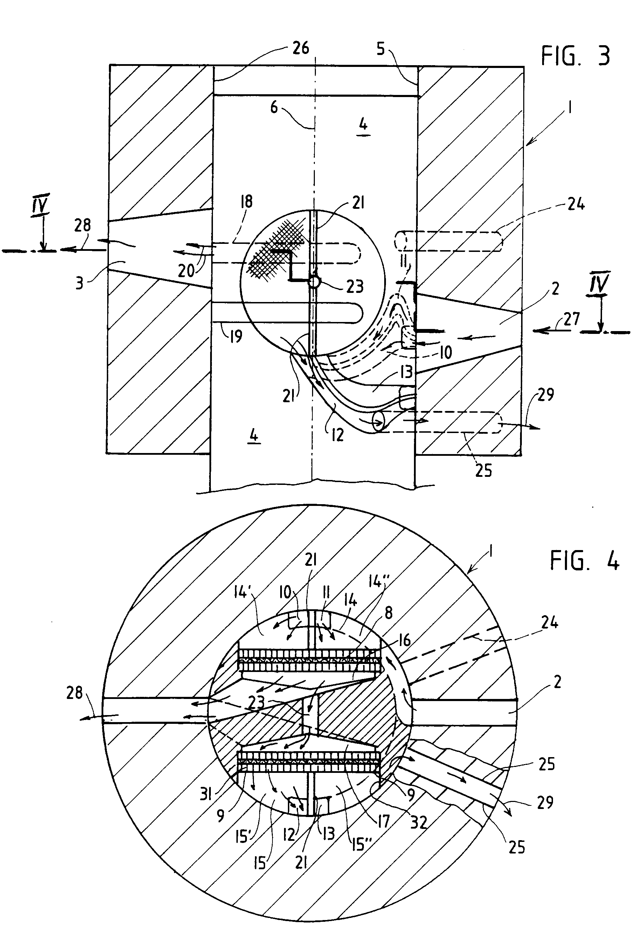

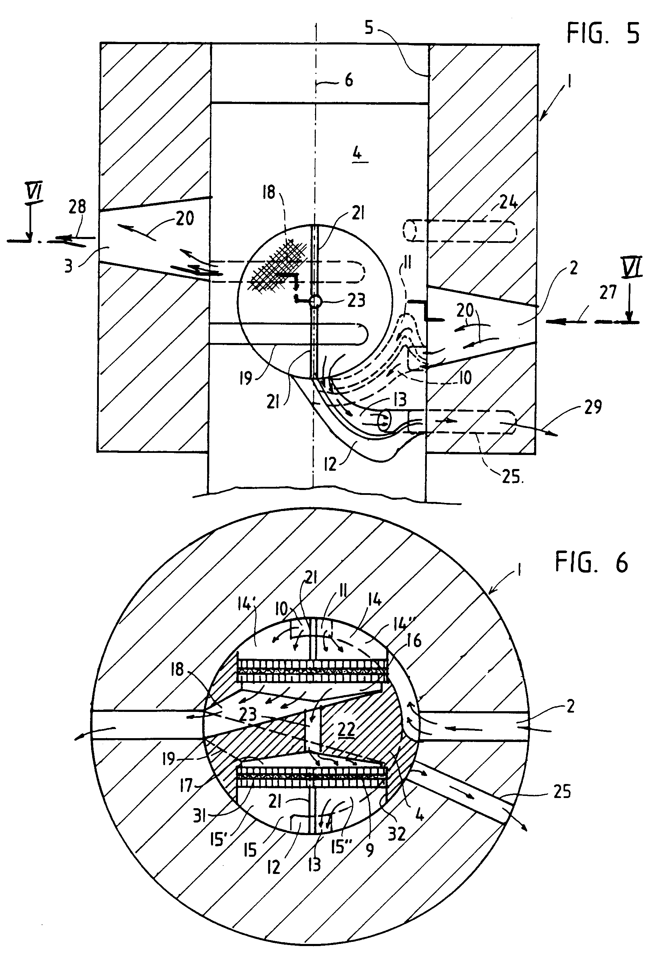

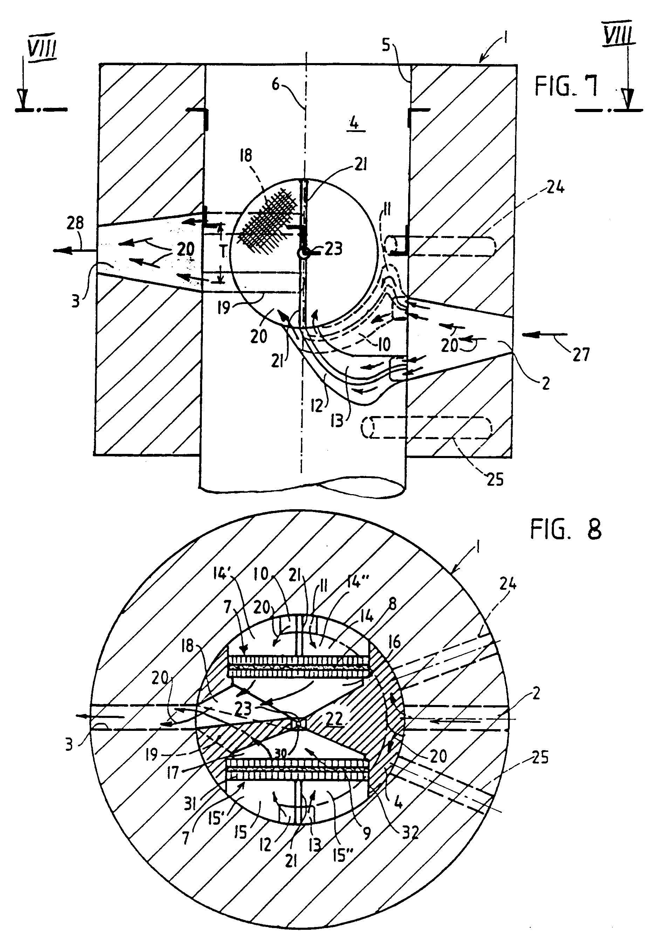

Weitere Kennzeichen und Vorteile der vorliegenden Erfindung ergeben sich aus der Beschreibung eines Ausführungsbeispieles, welches in der Zeichnung schematisch dargestellt ist. Fig.1 zeigt die Vorrichtung in der Filtrierstellung im Schnitt durch die Achse des Trägerkörpers, wobei letzterer jedoch in Seitenansicht dargestellt ist. Fig.2 zeigt die Vorrichtung nach Fig.1 im Schnitt nach der Linie II-II der Fig.1. Die Fig.3 und 4 sind Schnitte ähnlich Fig.1 bzw. Fig.2, sie zeigen die Vorrichtung jedoch in der Rückspülstellung für die linke Hälfte des in Fig.4 unten liegenden Siebnestes. Die Fig.5 und 6 sind Schnitte ähnlich zu Fig.3 bzw. Fig.4, jedoch zeigen sie die Vorrichtung in der Rückspülstellung für die rechte Hälfte des in Fig.6 unten liegenden Siebnestes. Die Fig.7 und 8 zeigen Schnitte ähnlich Fig.1 bzw. 2, jedoch bei einer etwas abgewandelten Ausführungsform der mittigen Trennwand zwischen den beiden Sieb-. nestern.

Die Vorrichtung hat ein Gehäuse 1, das einen Zuführkanal 2 für das zu filtrierende thermoplastische Kunststoffmaterial und einen Abgabekanal 3 für das filtrierte Material aufweist. Auf dem Weg von dem Zuführkanal 2 zum Abgabekanal 3 durchströmt das Material einen Trägerkörper 4 in Form eines Rotationszylinders, welcher in einer zylindrischen Bohrung 5 des Gehäuses 1 in Richtung seiner Achse 6 längsverschiebbar ist. In den Trägerkörper 4 ist eine Siebanordnung 7 eingebettet, welche zwei Siebnester 8,9 aufweist, deren jedes aus zwei Lochplatten besteht, zwischen denen eine Filtereinlage zur Filtrierung des Kunststoffmateriales liegt. Den Siebnestern 8,9 wird das zu filtrierende Material in der Filtrierposition der Vorrichtung (Fig.1,2) mittels Zuströmkanälen 10,11 bzw. 12,13 zugeführt, welche in vor den Siebnestern 8,9 liegende Verteilerräume 14 bzw.15 münden. Hinter den Siebnestern 8,9, gesehen in Flußrichtung der Schmelze beim Filtriervorgang, liegen Sammelräume 16,17 für die Schmelze, aus welchen Räumen die Schmelze durch Abströmkanäle 18 bzw.19 in den für beide Abströmkanäle gemeinsamen Abgabekanal 3 in Richtung der Pfeile 20 strömt. Die beiden Zuströmkanäle 10,11 bzw. 12,13 der beiden Siebnester 8 bzw.9 liegen beiderseits einer mittigen Wand 21, welche normal zur Fläche des Siebes des jeweiligen Siebnestes 8,9 verläuft und von diesem Sieb bis zum Umfang des Trägerkörpers 4 reicht, so daß diese Wand 21 das zugeordnete Sieb über eine Lochplatte 31 beim Rückspülen abstützt, die mit den anderen Bestandteilen des Siebnestes 8,9 in eine Vertiefung 32 des Trägerkörpers 4 eingesetzt ist. Die Wand 21 unterteilt den zugeordneten Verteilerraum 14 bzw.15 in zwei einander gleiche Abteile 14' ,14'' bzw. 15' ,15''.

Die beiden Sammelräume 16,17 sind voneinander durch eine quer zur Achse des Trägerkörpers 4 verlaufende Trennwand 22 voneinander getrennt, welche von einer einen Rückspülkanal 23 bildenden mittigen Bohrung oder einem Durchbruch durchsetzt ist, welche die beiden Sammelräume 15,16 verbindet.

Das Gehäuse 1 weist ferner auf der Seite des Zuführkanales 2 zwei Kanäle 24,25 auf, von denen jeweils einer zur Abfuhr von bei der Rückspülung entfernten Verunreinigungen dient. Diese Kanäle 24,25 können in einen nicht dargestellten Sammelraum zur Aufnahme dieser Verunreinigungen führen, oder ins Freie.

Die beiden Abströmkanäle 18,19 sind in Richtung der Achse 6 um ein Teilungsmaß T (Fig.1) relativ zueinander versetzt. Der Abstand T ist so bemessen, daß in der in den Fig.1 und 2 dargestellten Filtrierstellung die Mündungen beider Abströmkanäle 18,19 von der Eingangsöffnung des Abgabekanales 3 überdeckt sind. Eine trichterförmige Erweiterung des Abgabekanales 3 gegen die beiden Kanäle 18,19 zu erleichtert dies. Dieselbe Teilung T findet sich auf der Zulaufseite, und zwar sind die Mündungen der paarweise angeordneten Zuströmkanäle 10,11 bzw. 12,13 gleichfalls in Richtung der Achse 6 relativ zueinander versetzt. Auch hier ist die Anordnung so getroffen, daß die Mündungen dieser vier Zuströmkanäle 10 bis 13 an der Wand des Trägerkörpers 4 von der trichterartig erweiterten Mündung des Zuführkanales 2 in der Filtrierstellung (Fig.1,2) zur Gänze überdeckt sind, so daß allen vier Abteilen 14',14''. 15', 15'' der Verteilerräume 14,15 gleichmäßig die zu filtrierende Schmelze zugeführt wird. Diese Schmelze durchströmt die beiden Filter der Siebnester 8,9, wird dadurch gereinigt und die gereinigte Schmelze strömt durch die Ablaufkanäle 18,19 in den Abgabekanal 3.

Der Trägerkörper 4 läßt sich um seine Achse 6 nicht drehen, jedoch in Richtung dieser Achse 6 nach Wahl in eine von vier Rückspülstellungen verschieben, von welchen zwei in den Fig.3,4 bzw. 5,6 dargestellt sind, und zwar jene Rückspülstellung, in welcher die linke Hälfte des Siebnestes 9 gereinigt wird (Fig.3,4) und jene, in welcher die rechte Hälfte dieses Siebnestes 9 gereinigt wird (Fig.5,6). In der Rückspülstellung nach den Fig.3,4 ist der Trägerkörper 4 aus der in den Fig.1,2 dargestellten Filtrierstellung so weit nach unten verschoben, daß einerseits der Abströmkanal 19 durch die Innenwand 26 des Gehäuses 1, an welcher der Trägerkörper 4 längsverschiebbar geführt ist, abgeschlossen ist, anderseits die Zuströmkanäle 12,13. Der Zuströmkanal 12 steht jedoch mit dem Kanal 25 in Verbindung und dient somit als Ableitkanal für Verunreinigungen aus dem linken Abteil 15' des Verteilerraumes 15. Die in Richtung des Pfeiles 27 zugeführte, zu reinigende Kunststoffschmelze kann somit aus dem Zuführkanal 2 lediglich in die Zuströmkanäle 10,11 eintreten und strömt dort in Pfeilrichtung in die beiden Abteile 14' ,14'' des Verteilerraumes 14. Die dort zugeführte Schmelze durchtritt das Sieb des Siebnestes 8, wird hiebei gereinigt und strömt zum Teil über den Ablaufkanal 18 in den Abgabekanal 3, aus dem sie in Richtung des Pfeiles 28 zur Verwendungsstelle, z.B. zu einem Schneckenextruder mit angeschlossener Form, strömt. Der andere Teil der Schmelze strömt aus dem Sammelraum 16 in Pfeilrichtung durch den Sückspülkanal 23 in den Sammelraum 17 des Siebnestes 9. Da der dem rechten Abteil 15'' des Verteilerraumes 15 zugeordnete Zuströmkanal 13 abgeschlossen ist (siehe Fig.3), kann die Schmelze aus dem Sammelraum 17 nur durch die linke Hälfte des Siebes des Siebnestes 9 in den Verteilerraum 15 eintreten. Es wird daher nur die linke Hälfte des Siebnestes 9 durch die aus dem Rückspülkanal 23 zugeführte gereinigte Schmelze gespült und die in dieser Siebhälfte festgesetzten Verunreinigungen werden durch diese Spülschmelze von der Siebhälfte gelöst, in Pfeilrichtung durch die strömende Schmelze mitgenommen und durch den Zuströmkanal 12, welcher jetzt als Abströmkanal dient, in den Kanal 25 geführt, in welchem sie in Richtung des Pfeiles 29 abgeführt werden, z.B. zum erwähnten Sammelraum. Wie ersichtlich, bleibt bei diesem auf die linke Hälfte des Siebnestes 9 beschränkten Reinigungsvorgang die Versorgung des an den Abgabekanal 3 angeschlossenen Systems mit Schmelze aufrecht und es entsteht nur ein geringer Druckunterschied im Abgabekanal 3 zwischen der normalen Filterposition (Fig.1,2) und der Rückspülposition (Fig.3,4). Da nur eine Hälfte des Siebnestes 9 gespült wird, konzentriert sich der durch den Rückspülkanal 23 zugeführte reine Schmelzenstrom auf diese linke Siebhälfte, so daß durch diese Siebhälfte eine doppelte Fließgeschwindigkeit der Schmelze und damit ein verbesserter Reinigungseffekt auftritt.

Analoge Verhältnisse liegen vor, wenn die rechte Hälfte des Siebnestes 9 rückgespült werden soll. Hiezu wird der Trägerkörper 4 in die in den Fig.5 und 6 dargestellte Position verschoben, in welcher - wie bei der Position nach den Fig.3 und 4 - der Abströmkanal 19 gegenüber dem Abgabekanal 3 abgeschlossen ist und auch die Zuströmkanäle 12,13 gegenüber dem Zuführkanal 2 abgeschlossen sind. Zum Unterschied von der Position nach den Fig.3 und 4 ist bei der Rückspülstellung nach den Fig.5 und 6 der Zuströmkanal 13 mit dem Kanal 25 verbunden. Die zur Verbrauchsstelle zugeführte Schmelze strömt wie bei der Rückspülposition nach den Fig.3 und 4 in Pfeilrichtung 27 durch den Zuführkanal 2 in die beiden Zuströmkanäle 10,11, von dort in die beiden Abteile des Verteilerraumes 14, durchsetzt das Siebnest 8 und strömt durch den Abströmkanal 18 in den Abgabekanal 3. Im Sammelraum 16 wird ein Teil der durch das Siebnest 8 hindurchgetretenen gereinigten Schmelze abgezweigt und strömt durch den Rückströmkanal 23 in den Sammelraum 17, von wo diese Schmelze nur durch die rechte Hälfte des Siebnestes 9 in das rechte Abteil 15'' des Verteilerraumes 15 gelangen kann. Die durch die rechte Siebhälfte mit erhöhter Geschwindigkeit strömende Schmelze nimmt die Verunreinigungen in den Zuströmkanal 13 mit, aus welchem die Verunreinigungen über den Kanal 25 in Richtung des Pfeiles 29 abgeführt werden.

Die Verhältnisse für die Rückspülung des oberen Siebnestes 8 sind analog zu den vorbeschriebenen Rückspülstellungen nach den Fig.3,4 bzw. 5,6: Zur Rückspülung der in Fig.2 links liegenden Hälfte des Siebnestes 8 muß lediglich der Trägerkörper 4 für die Siebanordnung 7 so verschoben werden, daß zwar der Abströmkanal 19 mit dem Abgabekanal 3 in Verbindung steht, nicht aber der Abströmkanal 18. Weiters müssen die beiden Zuströmkanäle 12,13 mit dem Zuführkanal 2 in Verbindung stehen und der Zuführkanal 10 mit dem Kanal 24. Die zur Reinigung der linken Siebhälfte verwendete Schmelze strömt dann aus dem Zuführkanal 2 durch die beiden Zuströmkanäle 12,13 in den Verteilerraum 15, und durch das Siebnest 9 hindurch in den Sammelraum 17, wo ein Teil der Schmelze zum Abgabekanal 3 strömt. Der andere Teil der gereinigten Schmelze tritt durch den Rückspülkanal 23 hindurch in den Sammelraum 16 des Siebnestes 8, durchströmt dessen linke Hälfte, reinigt sie hiebei und führt die von der Schmelze mitgeführten Verunreinigungen durch den Zuströmkanal 10 in den Kanal 24 ab.

Die Verhältnisse für die Reinigung der rechten Hälfte des Siebnestes 8 sind analog, es muß lediglich der Zuströmkanal 11 mit dem Kanal 24 in Verbindung gebracht werden.

Wie ersichtlich, muß der Trägerkörper 4 zwar in verschiedene Positionen verlagerbar, aber nicht hierzu unbedingt in Längsrichtung verschiebbar sein. Es ist vielmehr durchaus möglich, die beschriebene Zuschaltung bzw. Abschaltung der einzelnen Kanäle auch durch eine Verdrehung des Trägerkörpers 4 um seine Achse 6 zu erreichen.

Wie ersichtlich, sind die beiden Siebnester 8,9 in entsprechende Ausnehmungen des Trägerkörpers 4 mit zueinander parallelen Siebflächen eingesetzt. Dies bildet eine übersichtliche, leicht herstellbare Anordnung und erleichtert Montage und Demontage. Zur Erzielung besonderer Strömungsverhältnisse wäre es jedoch auch denkbar, die beiden Siebnester 8,9 etwa in V-förmiger Anordnung in den Trägerkörper 4 einzubetten, ebenso wie auch mehr als zwei Siebnester vorgesehen sein können. Es kann auch jedes Siebnest in mehr als zwei Teilbereiche für die Rückspülung unterteilt werden, wozu lediglich die Anordnung der Wände 21 und der Kanäle 10 bis 13 entsprechend zu vervielfachen ist. Die Verwendung gleichgroßer Abteile, in welche die Verteilerräume unterteilt sind, empfiehlt sich aus Gründen der Gleichmäßigkeit, insbesondere hinsichtlich des über den Abgabekanal 3 abgegebenen Durchsatzes, ist aber nicht unbedingt erforderlich.

Im wesentlichen ist das Verhältnis der Schmelzenströme, welche bei der Rückspülung aus dem jeweiligen Sammelraum in den Abgabekanal 3 bzw. in den Rückspülkanal 23 strömen, bzw. Rückspülstrom, zum gesamten durch die Vorrichtung fließenden Kunststoffstrom, durch die Kanalquerschnitte bestimmt. Es kann durch Einsetzen unterschiedlicher Drosselkörper in diese Kanäle, insbesondere in den Rückspülkanal 23 über die entsprechenden Durchflußwiderstände beeinflußt bzw. kontrolliert werden. Ein als Drosseldüse ausgebildetes austauschbares Drosselglied 30 ist in Fig.2 schematisch angedeutet. Gegebenenfalls kann ein solches Drosselglied hinsichtlich seines Durchströmquerschnittes einstellbar sein.

Die in den Fig.7 und 8 dargestellte Ausführungsvariante unterscheidet sich von der zuvor beschriebenen Ausführungsform lediglich dadurch, daß die Trennwand 22, welche zwischen den beiden Sammelräumen 16,17 liegt, dünner ausgebildet ist, insbesondere im zentralen Abschnitt der Trennwand. Dadurch ergeben sich einerseits noch günstigere Strömungsverhältnisse für die Kunststoffschmelze, anderseits wird die Länge des Rückspülkanales 23 auf ein Minimum begrenzt. Dieser Rückspülkanal 23 braucht daher nur so lange zu sein, als es zur sicheren Halterung des Drosselgliedes 30 nötig ist. Die kurze Länge des Rückspülkanales 23 erleichtert auch die Montage des Drosselgliedes 30 sowie dessen Zugänglichkeit zwecks Ersatz oder Reinigung.

Die in der Zeichnung dargestellten Ausführungsbeispiele sind der Einfachheit halber mit je einem einzigen Zuführkanal 2 bzw. Abgabekanal 3 dargestellt. In der Praxis ist es zumeist günstiger, mehr als einen Zuführkanal 2 bzw. Abgabekanal 3 vorzusehen, wobei lediglich die erwähnten Anschlußverhältnisse gewahrt bleiben müssen.

## Patentansprüche

1. Filtriervorrichtung für thermoplastisches Kunststoffmaterial, mit einem Gehäuse (1), in welchem zumindest ein Zuführkanal (2) für das zu filtrierende Material und zumindest ein Abgabekanal (3) für das filtrierte Material vorgesehen sind, und mit zumindest einem im Gehäuse (1) zwischen Filtrierstellung und Rückspülstellung verlagerbar geführten Trägerkörper (4) für eine zumindest zwei Siebnester (8,9) aufweisende Siebanordnung (7), wobei in Filtrierstellung an der Zustromseite der Siebnester (8,9) angeordnete Verteilerräume (14, 15) über Zuströmkanäle (10,11,12,13) mit dem Zuführkanal (2) bzw. den Zufuhrkanälen und an der Abstromseite der Siebnester (8,9) angeordnete Sammelräume (16,17) über Abströmkanäle (18,19) mit dem Abgabekanal (3) bzw. den Abgabekanälen verbunden sind und in Rückspülstellung filtriertes Material aus dem Sammelraum (16,17) eines Siebnestes (8,9) über einen Rückspülkanal (23) in den Sammelraum (16,17) eines anderen, zu reinigenden Siebnestes (8,9) führbar und bei geschlossenem Abstromkanal (18, 19) dieses anderen Siebnestes (8, 9) zusammen mit der Verunreinigung über den Verteilerraum (14, 15) dieses anderen Siebnestes (8, 9) aus der Vorrichtung abführbar ist dadurch gekennzeichnet, daß für die im selben Trägerkörper (4) befindlichen Siebnester (8,9) unterschiedliche Rückspülstellungen dieses Trägerkörpers (4) vorgesehen sind und der zur Gänze im Trägerkörper (4) angeordnete Rückspülkanal (23) eine zwischen den beiden Siebnestern (8,9) liegende Trennwand (22) des Trägerkörpers (4) durchsetzt und die Sammelräume (16,17) der beiden Siebnester (8,9) desselben Trägerkörpers (4) unmittelbar miteinander verbindet.

2. Filtriervorrichtung nach Anspruch 1, dadurch gekennzeichnet, daß unterschiedliche Rückspülstellungen des Trägerkörpers (4) für die Rückspülung unterschiedlicher Teilbereiche des Siebes des jeweiligen Siebnestes (8 bzw.9) vorgesehen sind, welche Teilbereiche durch zumindest eine den Verteilerraum (14 bzw.15) des jeweiligen Siebnestes (8 bzw.9) unterteilende, zum zugehörigen Sieb führende, insbesondere normal auf die Fläche dieses Siebnestes stehende Wand (21) begrenzt sind.

3. Filtriervorrichtung nach Anspruch 2, dadurch gekennzeichnet, daß für jedes Siebnest (8,9) eine der Anzahl seiner Siebteilbereiche entsprechende Anzahl von Zuströmkanälen (10,11 bzw. 12,13) vorgesehen ist, von denen jeweils einer in das dem jeweiligen Siebteilbereich zugeordnete Abteil (14',14'' bzw. 15',15'') des Verteilerraumes (14 bzw.15) mündet, wobei in der Filtrierstellung alle diese Zuströmkanäle (10 bis 13) mit dem gemeinsamen Zuführkanal (2) in Verbindung stehen, wogegen in jeder Rückspülstellung jeweils einer der dem zu reinigenden Siebnest zugeordneten Zuströmkanäle zur Ableitung der Verunreinigungen dient und die anderen diesem Siebnest zugeordneten Zuströmkanäle abgeschlossen sind.

4. Filtriervorrichtung nach den Ansprüchen 2 und 3, dadurch gekennzeichnet, daß im Gehäuse (1) pro Siebnest (8,9) ein Abfuhrkanal (24,25) zur Abfuhr von Verunreinigungen vorhanden ist, von welchen Abfuhrkanälen (24,25) in jeder der Rückspülstellungen des Trägerkörpers (4) jeweils einer mit einem Zuströmkanal (10 bis 13) in Verbindung steht, wogegen die anderen Abfuhrkanäle durch die Wand des Trägerkörpers (4) abgeschlossen sind.

5. Filtriervorrichtung nach einem der Ansprüche 2 bis 4, dadurch gekennzeichnet, daß jeder Trägerkörper (4) ein in seiner Längsrichtung im Gehäuse (1) verschiebbar gelagerter Kolben ist, der zumindest zwei einander zu beiden Seiten seiner Achse (6) gegenüberliegende Siebnester (8,9) aufweist, deren jedes einen Abströmkanal (18 bzw.19) und zumindest zwei eigene Zuströmkanäle (10,11 bzw. 12,13) hat, die in zumindest zwei vorzugsweise annähernd gleich große, Abteile (14',14'' bzw. 15',15'') des dem jeweiligen Siebnest (8 bzw. 9) zugehörigen Verteilerraumes (14 bzw.15) führen, wobei benachbarte Abteile voneinander jeweils durch eine Wand (21) getrennet sind, und wobei die Zuströmkanäle (10,11 bzw. 12,13) von in Achsrichtung gegeneinander versetzten Stellen des Kolbermantels ausgehen, wobei in der Filtrierstellung die Mündungen aller Zuströmkanäle (10 bis 13) vom Zuführkanal (2) überdeckt sind und die Mündungen der beiden Abströmkanäle (18,19) vom Abgabekanal (3) überdeckt sind.

6. Filtriervorrichtung nach Anspruch 5, dadurch gekennzeichnet, daß die Mündungen der Zuströmkanäle (10 bis 13) um dasselbe Maß in Achsrichtung des den Trägerkörper (4) bildenden Kolbens gegeneinander versetzt sind wie die Mündungen der Abströmkanäle (18,19).

7. Filtriervorrichtung nach einem der Ansprüche 1 bis 6, dadurch gekennzeichnet, daß die Siebnester (8,9) zueinander parallele Siebflächen haben.

8. Filtriervorrichtung nach einem der Ansprüche 1 bis 7, dadurch gekennzeichnet, daß in einem gemeinsamen Gehäuse (1). zwei einander gleiche Trägerkörper (4) mit je zwei Siebnestern (8,9) angeordnet sind.

9. Filtriervorrichtung nach einem der Ansprüche 1 bis 7, dadurch gekennzeichnet, daß ein einziger Trägerkörper (4) mehr als zwei, insbesondere vier Siebnester (8,9) trägt.

10. Filtriervorrichtung nach einem der Ansprüche 1 bis 9, dadurch gekennzeichnet, daß im Rückspülkanal (23) und bzw. oder im Abfuhrkanal (24,25) zur Abfuhr von Verunreinigungen ein, gegebenenfalls einstellbares, Drosselglied, insbesondere eine einstellbare oder austauschbare Drosseldüse (30), angeordnet ist.

## Claims

1. Filtering apparatus for thermoplastic synthetic material, having a housing (1) in which at least one supply channel (2) for the material to be filtered and at least one discharge channel (3) for the filtered material are provided, and having at least one carrier body (4) which is guided in the housing (1) such that it is displaceable between a filtering position and a backwashing position, the carrier body (4) being for a strainer arrangement (7) which has at least two straining nests (8, 9), wherein in the filtering position distributor spaces (14, 15) which are arranged on the inflow aide of the straining nests (8, 9) are connected by way of inflow channels (10, 11, 12, 13) to the supply channel (2) or supply channels and collecting spaces (16, 17) arranged on the outflow side of the straining nests (8, 9) are connected by way of outflow channels (18, 19) to the discharge channel (3) or discharge channels, and in the backwashing position filtered material is guidable from the collecting space (16, 17) of one straining nest (8, 9) by way of a backwashing channel (23) into the collecting space (16, 17) of another straining nest (8, 9) to be cleaned and, in the event of the outflow channel (18, 19) of this other straining nest (8, 9) being closed, this filtered material is guidable, together with the impurity, through the distributor space (14, 15) of this other straining nest (8, 9) out of the apparatus, characterized in that different backwashing positions of this carrier body (4) are provided for the straining nests (8, 9) located in the same carrier body (4), and the backwashing channel (23) arranged entirely in the carrier body (4) passes through a partition wall (22) of the carrier body (4), lying between the two straining nests (8, 9), and connects directly to one another the collecting spaces (16, 17) of the two straining nests (8, 9) of the same carrier body (4).

2. Filtering apparatus according to Claim, 1, characterized in that different backwashing positions of the carrier body (4) are provided for backwashing different partial regions of the strainer of the respective straining nest (8 or 9), which partial regions are delimited by at least one wall (21) which divides the distributor space (14 or 15) of the respective straining nest (8 or 9), leads to the respective strainer and in particular is normal to the surface of this straining nest.

3. Filtering apparatus according to Claim 2, characterized in that there is provided for each straining nest (8,, 9) a number of inflow channels (10, 11 and 12, 13) which corresponds to the number of its strainer partial regions, each of which inflow channels (10, 11 and 12, 13) opens into the respective compartment (14', 14'' and 15', 15'') of the distributor space (14 and 15) which is associated with the respective strainer partial region, all these inflow channels (10 to 13) being connected in the filtering position to the common supply channel (2), whereas in each backwashing position in each case one of the inflow channels associated with the straining nest to be cleaned serves to guide away the impurities and the other inflow channels associated with this straining nest are closed off.

4. Filtering apparatus according to Claims 2 and 3, characterized in that there is one removal channel (24, 25) for removing impurities in the housing (1) for each straining nest (8, 9), one of which removal channels (24, 25) being connected to a respective inflow channel (10 to 13) in each of the backwashing positions of the carrier body (4), whereas the other removal channels are closed off by the wall of the carrier body (4).

5. Filtering apparatus according to one of Claims 2 to 4, characterized in that each carrier body (4) is a piston mounted displaceably in its longitudinal direction in the housing (1) and having at least two straining nests (8, 9) opposite one another on either side of its axis (6), of which straining nests (8, 9) each has one outflow channel (18 or 19) and at least two of its own inflow channels (10, 11 and 12, 13), which lead to at least two compartments (14', 14'' and 15', 15''), which are preferably approximately the same size, of the distributor space (14 and 15) associated with the respective straining nests (8 and 9), adjacent compartments being separated from one another in each case by a wall (21), and the inflow channels (10, 11 and 12, 13) extending from points on the piston outer surface offset with respect to one another in the axial direction, in the filtering position the orifices of all the inflow channels (10 to 13) being covered by the supply channel (2) and the orifices of the two outflow channels (18, 19) being covered by the discharge channel (3).

6. Filtering apparatus according to Claim 5, characterized in that the orifices of the inflow channels (10 to 13) are offset with respect to one another in the axial direction of the piston forming the carrier body (4) by the same amount as the orifices of the outflow channels (18, 19).

7. Filtering apparatus according to one of Claims 1 to 6, characterized in that the straining nests (8, 9) have mutually parallel straining surfaces.

8. Filtering apparatus according to one of Claims 1 to 7, characterized in that two mutually similar carrier bodies (4) each having two straining nests (8, 9) are arranged in a common housing (1).

9. Filtering apparatus according to one of Claims 1 to 7, characterized in that a single carrier body (4) carries more than two, in particular four, straining nests (8, 9).

10. Filtering apparatus according to one of Claims 1 to 9, characterized in that a choke member, which may be adjustable, in particular an adjustable or replaceable choke nozzle (30), is arranged in the backwashing channel (23) and/or in the removal channel (24, 23) for removing impurities.

## Revendications

1. Dispositif de filtration pour matière thermoplastique, comportant un carter (1) dans lequel sont prévus au moins un canal d'alimentation (2) pour la matière à filtrer et au moins un canal de sortie (3) de la matière filtrée, et au moins un support (4) mobile dans le carter (1) entre une position de filtrage et une position de rétrolavage, destiné à recevoir un système filtrant (7) présentant au moins deux éléments filtrants (8, 9), des chambres de distribution (14, 15), situées côté alimentation des éléments filtrants (8, 9), étant reliées par des canaux d'admission (10, 11, 12, 13) au(x) canal ou canaux d'alimentation (2), et des chambres collectrices (16, 17), situées côté sortie des éléments filtrants (8, 9), étant reliées par des canaux d'écoulement (18, 19) au(x) canal ou canaux de sortie (3) en position de filtrage, et de la matière filtrée pouvant, en position de rétrolavage, être dirigée de la chambre collectrice (16, 17) d'un élément filtrant (8, 9) via un canal de rétrolavage (23) dans la chambre collectrice (16, 17) d'un autre élément filtrant (8, 9) à nettoyer et évacuée hors du dispositif avec les impuretés via la chambre de distribution (14, 15) de cet autre élément filtrant (8, 9), lorsque le canal d'écoulement (18, 19) de cet autre élément filtrant (8, 9) est fermé, caractérisé en ce qu'il est prévu différentes positions de rétrolavage du support (4) pour les éléments filtrants (8, 9) situés dans le même support (4) et en ce que le canal de rétrolavage (23) disposé intégralement dans le support (4) traverse une paroi de séparation (22) du support (4) agencée entre les deux éléments filtrants (8, 9) et relie directement les chambres collectrices (16, 17) des deux éléments filtrants (8, 9) du même support (4).

2. Dispositif de filtration selon la revendication 1, caractérisé en ce qu'il est prévu différentes positions de rétrolavage du support (4) pour le rétrolavage de différentes parties du tamis de l'élément filtrant considéré (8 ou 9), lesquelles parties sont limitées par au moins une paroi (21), en particulier perpendiculaire à la surface de cet élément filtrant, divisant la chambre de distribution (14 ou 15) de l'élément filtrant considéré (8 ou 9) et conduisant au tamis correspondant.

3. Dispositif de filtration selon la revendication 2, caractérisé en ce que pour chaque élément filtrant (8, 9) est prévu un nombre de canaux d'admission (10, 11 ou 12, 13) correspondant au nombre de ses parties de filtrage, dont à chaque fois un débouche dans le compartiment (14', 14'' ou 15', 15'') de la chambre de distribution (14 ou 15) correspondant à la partie de filtrage concernée, tous ces canaux d'admission (10 à 13) étant reliés au canal d'alimentation commun (2) dans la position de filtration, alors que, dans chaque position de rétrolavage, à chaque fois un des canaux d'admission reliés à l'élément filtrant à nettoyer sert à l'évacuation des impuretés et les autres canaux d'admission reliés à cet élément filtrant sont fermés.

4. Dispositif de filtration selon les revendications 2 et 3, caractérisé en ce qu'un canal d'évacuation (24, 25) est prévu par élément filtrant (8, 9) dans le carter (1) pour l'évacuation des impuretés, un desdits canaux d'évacuation (24, 25) étant relié à un canal d'admission (10 à 13) dans chacune des positions de rétrolavage du support (4), alors que les autres canaux d'évacuation sont fermés par la paroi du support (4).

5. Dispositif de filtration selon l'une des revendications 2 à 4, caractérisé en ce que chaque support (4) consiste en un piston mobile axialement dans le carter (1), qui présente au moins deux éléments filtrants (8, 9) opposés de part et d'autre de son axe (6), dont chacun présente un canal d'écoulement (18 ou 19) et au moins deux canaux d'admission spécifiques (10, 11 ou 12, 13), qui conduisent à au moins deux compartiments (14', 14'' ou 15', 15''), de préférence de tailles voisines, de la chambre de distribution (14 ou 15) correspondant à l'élément filtrant concerné (8 ou 9), les compartiments voisins étant séparés l'un de l'autre par une paroi (21), et les canaux d'admission (10, 11 ou 12, 13) partant d'emplacements axialement décalés sur le corps du piston, les orifices d'entrée de tous les canaux d'admission (10 à 13) débouchant dans le canal d'alimentation (2) et les orifices de sortie des deux canaux d'écoulement (18, 19) débouchant dans le canal de sortie (3) dans la position de filtration.

6. Dispositif de filtrage selon la revendication 5, caractérisé en ce que les orifices d'entrée des canaux d'admission (10 à 13) sont décalés les uns par rapport aux autres de la même distance, dans la direction axiale du piston formant le support (4), que les orifices de sortie des canaux d'écoulement (18, 19).

7. Dispositif de filtration selon l'une des revendications 1 à 6, caractérisé en ce que les éléments filtrants (8, 9) présentent des surfaces de filtrage parallèles.

8. Dispositif de filtration selon l'une des revendications 1 à 7, caractérisé en ce que dans un carter commun (1) sont agencés deux supports (4) identiques comportant chacun deux éléments filtrants (8, 9).

9. Dispositif de filtration selon l'une des revendications 1 à 7, caractérisé en ce qu'un support (4) unique porte plus de deux, en particulier quatre éléments filtrants (8, 9).

10. Dispositif de filtration selon l'une des revendications 1 à 9, caractérisé en ce que dans le canal de rétrolavage (23) et/ou dans le canal d'évacuation (24, 25), destiné à l'évacuation des impuretés, est prévu un élément d'étranglement, le cas échéant, réglable, en particulier une buse d'étranglement (30) réglable ou échangeable.
